Europäisches Patentamt

European Patent Office

Office européen des brevets

(11) Numéro de publication : **0 421 835 B1**

(12)

# FASCICULE DE BREVET EUROPEEN

(45) Date de publication du fascicule du brevet :
28.07.93 Bulletin 93/30

(51) Int. Cl.⁵ : **G01D 5/14,** G01D 5/16,
G01D 5/244

(21) Numéro de dépôt : **90402517.8**

(22) Date de dépôt : **12.09.90**

(54) **Codeur à haute résolution.**

(30) Priorité : **18.09.89 US 408592**

(43) Date de publication de la demande :
**10.04.91 Bulletin 91/15**

(45) Mention de la délivrance du brevet :
**28.07.93 Bulletin 93/30**

(84) Etats contractants désignés :
**DE ES GB IT SE**

(56) Documents cités :
**WO-A-88/07172**
**FR-A- 1 326 955**
**GB-A- 2 056 692**

(56) Documents cités :
**TOUTE L'ELECTRONIQUE. no. 523, avril 1987,**
**Paris, FR, pages 52-56; P. Aucremanne:**
**"Interrupteurs magnetique"**
**PATENT ABSTRACTS OF JAPAN vol. 9, no.**
**269 (P-400)() 26 octobre 1985, & JP-A-60**
**115813 (SHINKOUBE DENKI KK) 22 juin 1985,**

(73) Titulaire : **S.N.R. ROULEMENTS**
**Boîte Postale 17 1, rue des Usines**
**F-74010 Annecy Cédex (FR)**

(72) Inventeur : **Brauer, Michael C.**
**Cabinet Ballot-Schmit, 7, rue Le Sueur**
**F-75116 Paris (FR)**
Inventeur : **Santos, John A.**
**Cabinet Ballot-Schmit, 7, rue Le Sueur**
**F-75116 Paris (FR)**

(74) Mandataire : **Ballot, Paul Denis Jacques et al**
**Cabinet Ballot-Schmit, 7, rue le Sueur**
**F-75116 Paris (FR)**

Jouve, 18, rue Saint-Denis, 75001 PARIS

## Description

La présente invention concerne des codeurs qui comportent un nombre relativement élevé de paires de pôles magnétiques avec une valeur seuil d'induction magnétique, pour permettre leur utilisation dans des applications à haute résolution. L'invention est particulièrement adaptée pour une utilisation avec des cibles codées magnétiquement dans des paliers détecteurs aptes à produire des signaux de sortie à résolution relativement élevée, comme le requièrent de nombreuses applications dans l'automobile.

L'invention peut être utilisée indifféremment avec des codeurs allongés, ou des codeurs annulaires, ou des codeurs de configuration autre, fonction de l'application spécifique. Par exemple, un codeur allongé peut être utilisé pour déterminer la position de la partie tige d'un amortisseur. Utilisés dans des paliers détecteurs, les codeurs selon la présente invention sont destinés à former une unité en une seule pièce qui puisse être installée dans un palier comportant une bague extérieure et une bague intérieure, ou un flasque de butée fixe et un flasque de butée rotatif. L'invention est adaptée pour des utilisations avec une grande diversité de modèles de paliers, dont les paliers à billes, les roulements à rouleaux, les roulements à rouleaux coniques, et les roulements à aiguilles. On peut utiliser soit des configurations de paliers de butée, ou bien des configurations de roulement de type radial; en outre, les paliers coniques sont inclus, de même que les paliers à roulement, comportant des éléments roulants, avec ou sans cage, ou griffe de retenue, ou séparateur, et aussi les paliers à glissement sans éléments roulants.

Dans les codeurs de palier classiques, on prévoit généralement un nombre de paires de pôles magnétiques nord-sud (PPM) nettement inférieur au maximum possible. Plus ce nombre est petit, moins le niveau de résolution est élevé. Néanmoins, il n'est pas d'usage de rechercher des techniques pour augmenter le nombre de pôles, car des résolutions relativement basses sont acceptables pour beaucoup de formes de paliers de l'automobile comprenant un codeur. Le fait d'augmenter le nombre de paires de pôles magnétiques réduit l'écartement des pôles entre paires de pôles adjacentes et, par conséquent, réduit également la densité de flux magnétique émanant de chaque paire (PPM). Il s'ensuit que si une application à un produit spécifique nécessite une densité de flux minimum déterminée, on devra prendre soin de s'assurer que les paires de pôles magnétiques placées sur le codeur ne seront pas trop nombreuses pour réduire la densité de flux au-dessous de la valeur minimum acceptable. Le moyen le plus simple d'obtenir une densité de flux correcte consiste à maintenir un écartement de pôles relativement important, ce qui implique un nombre de paires de pôles (PPM) relativement bas. Disons à nouveau que ceci ne pose pas de problème si les exigences de résolution pour une application particulière ne sont pas sévères; par contre, si un niveau de résolution relativement élevé est nécessaire, le codeur selon la présente invention devient alors très utile.

Dans un codeur type pour un palier détecteur connu, l'écartement minimum entre pôles est d'environ 4 mm, ce qui correspond à un nombre de paires de pôles magnétiques d'environ 40 pour un codeur annulaire d'environ 5 cm de diamètre. Un tel codeur est décrit dans le brevet US n° 4 732 494 délivré le 22 mars 1988 au nom de Roger Guers et Georges Godard pour un "palier ou roulement à rouleaux avec capteur de données".

Les codeurs selon la présente invention comportent un nombre relativement élevé de paires de pôles magnétiques (PPM), positionnées de façon précise sur un élément magnétisable afin de satisfaire à des exigences d'application à haute résolution. Plus important, à chaque nombre total de paires de pôles magnétiques (PPM) pour un codeur, correspond une densité de flux magnétique optimale associée à chaque paire de pôles. Pour cette combinaison densité de flux-nombre de paires de pôles magnétiques, est établie une plage de valeurs unique et nouvelle pour des applications spécifiques, telles que des applications à des paliers. On a la relation suivante entre le flux et l'écartement de pôles :

$$Fr = \frac{(K_1)(X)}{25,4} - \frac{(K_2)(140X^2)}{(25,4)^2} + \frac{(K_3)(7\,920X^3)}{(25,4)^3} \quad (1)$$

où

$K_1$ = 1,58.10$^{-2}$ à 10,56.10$^{-2}$ Tesla par mm,

$K_2$ = 1,58.10$^{-2}$ à 10,56.10$^{-2}$ Tesla par mm$^2$,

$K_3$ = 1,58.10$^{-2}$ à 10,56.10$^{-2}$ Tesla par mm$^3$,

X est l'écartement de pôles (en mm) entre paires de pôles magnétiques adjacentes (PPM), et

$F_r$ est la plage de densité de flux magnétique de référence (en Tesla) à 20° C lorsque les valeurs numériques de $K_1$, $K_2$ et $K_3$ sont égales.

Cette relation donne satisfaction pour un entrefer de 0,9 mm entre la surface externe du codeur et la partie sensible du capteur. Toutes les densités de flux magnétique y sont mesurées ici au moyen d'un capteur de Hall, avec le même entrefer de 0,9 mm. La relation convient également pour la plupart des matériaux magnétiques, tels que ferrite de strontium, ferrite de baryum, samarium-cobalt ou néodyme-fer-bore.

L'écartement de pôles est, de préférence, choisi entre 0,25 mm, environ, et 1,25 mm, environ.

Pour $F_r$, la plage préférentielle de valeurs va de 2.10$^{-4}$ Tesla, environ, à 7.10$^{-2}$ Tesla, environ.

Dans une forme de réalisation particulière, l'élément magnétisable est en un matériau comprenant du ferrite de strontium ou du ferrite de baryum, selon un facteur de charge de 33 %. La valeur de la densité de flux magnétique de référence $F_r$ attribuée à chaque

paire de pôles magnétiques (PPM) est choisie dans la plage d'environ $2.10^{-4}$ Tesla à environ $1,58.10^{-2}$ Tesla, à une distance de 0,9 mm de la surface du codeur et à une température d'environ +20° C. Dans la relation (1), les plages de valeurs pour $K_1$, $K_2$, $K_3$ sont alors les suivantes :

$K_1$ = $1,58.10^{-2}$ à $2,3.10^{-2}$ Tesla par mm,

$K_2$ = $1,58.10^{-2}$ à $2,3.10^{-2}$ Tesla par mm$^2$,

$K_3$ = $1,58.10^{-2}$ à $2,3.10^{-2}$ tesla par mm$^3$.

Si l'élément magnétisable est annulaire, on peut, d'autre part, choisir un écartement de pôles de 0,25 mm, et un diamètre pour sa surface externe dans la plage d'environ 12,5 mm à environ 200 mm.

Il est aisé de déterminer le nombre de paires de pôles magnétiques (PPM) pour un codeur annulaire, étant donné que :

nombre de (PPM) = (D) $(\pi)$/X

où

D est le diamètre du codeur annulaire, et

X est l'écartement de pôles.

En résumé, le codeur selon la présente invention comme défini dans la revendication 1 comprend un élément magnétisable présentant une pluralité de paires de pôles magnétiques (PPM) écartées sur sa longueur à intervalles réguliers. Le codeur possède un nombre relativement élevé de paires de pôles magnétiques (PPM), et chacune de ces paires (PPM) a une densité de flux magnétique minimum ou de seuil prédéterminée. Ceci est important, par exemple, pour assurer qu'un capteur de Hall installé à proximité du codeur fermera ou coupera le contact pour un entrefer d'une valeur maximum déterminée, fonction d'une configuration de produit spécifique. Ce nombre relativement élevé de paires de pôles magnétiques (PPM), dont chacune a une densité de flux magnétique de valeur minimum ou de seuil, procure un pouvoir de résolution relativement élevé du produit.

Le procédé pour magnétiser le codeur comme défini dans la revendication 10 met en jeu les principales étapes suivantes:

(a) étudier les exigences pour l'application spécifique, afin de déterminer le nombre de paires de pôles magnétiques nécessaire pour obtenir le niveau de résolution désiré, et pour déterminer quelle configuration de codeur convient le mieux à cette application particulière, la valeur de densité de flux magnétique attribuée à chaque paire de pôles étant fonction d'une plage de valeurs d'écartement de pôles suivant la relation :

$$F_r = \frac{(K_1)(X)}{25,4} - \frac{(K_2)(140X^2)}{(25,4)^2} + \frac{(K_3)(7\,920X^3)}{(25,4)^3}$$

où

$K_1$ = $1,58.10^{-2}$ à $10,56.10^{-2}$ Tesla par mm

$K_2$ = $1,58.10^{-2}$ à $10,56.10^{-2}$ Tesla par mm$^2$

$K_3$ = $1,58.10^{-2}$ à $10,56.10^{-2}$ Tesla par mm$^3$

X est l'écartement de pôles entre paires (PPM) adjacentes (en mm), et

$F_r$ est la plage de densité de flux magnétique de référence (en Tesla) à +20° C, lorsque les valeurs numériques de $K_1$, $K_2$, $K_3$ sont égales;

(b) déterminer l'entrefer maximum associé à la configuration de codeur retenue pour cette application spécifique;

(c) déterminer la valeur minimum ou valeur de seuil de la densité de flux magnétique nécessaire pour assurer que le capteur établira ou coupera le contact dans des conditions d'entrefer maximum;

(d) déterminer quels matériaux magnétiques sont utilisables pour fabriquer le codeur de manière à y placer un nombre suffisant de paires de pôles magnétiques (PPM), chaque paire ayant un emplacement précis et une densité de flux au moins égale à la valeur déterminée à l'étape précédente (c), afin de satisfaire aux exigences concernant le niveau de résolution désiré pour l'application spécifique;

(e) faire un choix dans le groupe des matériaux magnétiques possibles, déterminé dans l'étape précédente (d), pour retenir le matériau optimal qui soit le meilleur marché tout en ayant la capacité de répondre aux exigences de l'application particulière; et

(f) magnétiser un élément annulaire fabriqué dans ce matériau optimal choisi dans l'étape (e) précédente, en formant au moins le nombre de paires de pôles magnétiques (PPM) nécessaire pour cette application spécifique à haute résolution, et de telle manière que chaque paire de pôles magnétiques (PPM) ait une densité de flux au moins égale à la valeur déterminée dans l'étape antérieure (c).

L'invention, ainsi que ses nombreux avantages, seront mieux compris en se référant à la description suivante détaillée et aux dessins annexés, dans lesquels :

la Fig. 1 est une vue en perspective d'un codeur allongé selon la présente invention;

la Fig. 2 est une vue en perspective d'un codeur annulaire selon la présente invention, particulièrement adapté pour une utilisation dans un palier de butée;

la Fig. 3 est une vue de face axiale d'un codeur annulaire, montrant les paires de pôles magnétiques écartées circonférentiellement, le codeur étant utilisé dans un roulement de type radial;

la Fig. 4 est une vue de côté du codeur de la Fig. 2, illustrant le flux magnétique émanant des pôles magnétiques lorsque le codeur est utilisé dans un palier de butée;

la Fig. 5 est une représentation de la courbe de sortie sinusoïdale de densité de flux magnétique pour les codeurs des Figs. 1 à 4; et

la Fig. 6 est un graphique montrant l'écartement de pôles minimum que l'on peut prévoir pour une densité de flux magnétique correspondante.

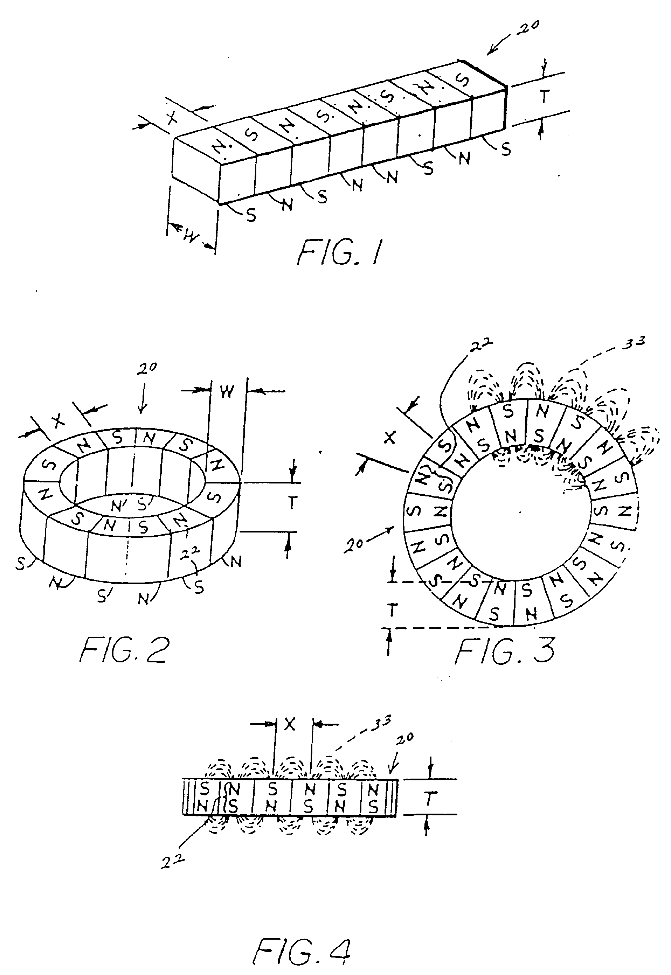

En se référant aux dessins, et plus particulièrement aux Figs. 1 et 2, la forme de réalisation préférée de l'invention consiste en un codeur 20 qui peut avoir une forme allongée telle que montrée à la Fig. 1, ou une forme annulaire telle que montrée à la Fig. 2. Dans les deux cas, le codeur 20 présente une pluralité de paires de pôles magnétiques (PPM) 22 positionnées à intervalles réguliers sur sa longueur. Le codeur doit être en un matériau métallique et magnétisable. De préférence, il s'agit d'un matériau synthétique qui a été "chargé" avec un matériau fortement magnétisable, tel que ferrite de strontium ou ferrite de baryum. D'autres matériaux de charge aptes à procurer des densités de flux magnétique élevées par volume de matériau peuvent être utilisés, par exemple du néodyme-fer-bore ou du samarium-cobalt, mais le ferrite de strontium et le ferrite de baryum peuvent normalement procurer une densité de flux magnétique suffisante pour moins cher, et ils sont donc préférés à ce titre. Le "facteur de charge" est le pourcentage, en volume, de matériau magnétisable chargé dans un codeur. Par exemple, un codeur en résine synthétique avec un facteur de charge de 33 % de ferrite de strontium comprend 33 % en volume de ferrite de strontium et 67 % en volume de résine synthétique. La densité de flux magnétique variera linéairement et proportionnellement avec le facteur de charge. Par exemple, à une température donnée, un codeur au ferrite de strontium avec un facteur de charge de 33 % aura une densité de flux magnétique ($F_{33}$) dont la relation avec le facteur de charge est la suivante :

$$F = (K_9/0,33) \times (F_{33})$$

où

F est la densité de flux magnétique corrigée pour le facteur de charge Kg,

$F_{33}$ est la densité de flux magnétique pour un facteur de charge de 33 %, et

$K_9$ est le facteur de charge du codeur.

Un codeur avec un facteur de charge de 80 % aura une densité de flux magnétique environ double de celle d'un même codeur avec un facteur de charge de 40%. En outre, si un codeur comprenant du néodyme-fer-bore a une densité de flux magnétique valant environ 1,6 fois celle d'un même codeur au ferrite de strontium, les deux ayant sensiblement le même facteur de charge, alors le codeur au néodyme-fer-bore avec un facteur de charge de 100% aura une densité de flux magnétique qui sera supérieure à celle d'un codeur au ferrite de strontium avec un facteur de charge de 33%, dans un rapport de 1,6/0,33, soit environ 4,8.

Les paires de pôles magnétiques (PPM) peuvent être orientées dans diverses directions, en fonction de la configuration du produit. Les Figs. 3 et 4 illustrent des orientations types de paires de pôles magnétiques (PPM), respectivement pour un codeur de roulement de type radial et pour un codeur de palier de butée. Aux Figs. 3 et 4, sont également indiqués en lignes discontinues les champs de flux magnétique 33. Le flux de crête 33 pour un codeur de roulement de type radial s'étend radialement vers l'extérieur à partir du codeur, comme on le voit à la Fig. 3. Au contraire, le codeur de palier de butée de la Fig. 4 a sa densité de flux maximum émanant axialement à partir du codeur. La partie du champ de flux magnétique où la densité est la plus importante est normalement orientée dans la direction d'un détecteur ou capteur de flux magnétique, de manière à optimiser la sensibilité du capteur pour une configuration de produit spécifique. L'orientation du capteur lui-même dépendra jusqu'à un certain point du type de capteur utilisé; par exemple, un capteur de Hall monté sur une puce de circuit intégré devra être placé perpendiculairement par rapport à la surface du codeur à détecter. Par contre, un capteur à magnétorésistance monté sur une puce de circuit intégré devra être tourné de 90° par rapport à l'orientation d'une puce à capteur de Hall, afin d'obtenir une détection optimale du flux magnétique du codeur. Comme on l'a expliqué ci-dessus, les valeurs de densité de flux prévues ici résultent de l'utilisation d'un capteur de Hall dont la partie sensible a été positionnée à environ 0,9 mm de la surface du codeur à mesurer.

La densité du flux magnétique doit être suffisante pour permettre au capteur de le détecter dans des conditions limites, c'est-à-dire lorsque l'entrefer entre le codeur et le capteur est maximum, à une température maximum. Le principal facteur qui puisse être contrôlé en vue d'obtenir une valeur seuil de densité de flux désirée est le facteur de charge, soit la quantité de matériau magnétisable, par unité de volume, chargée dans le matériau synthétique de base.

Le procédé pour magnétiser le codeur met en jeu les mêmes principales étapes que précédemment décrites.

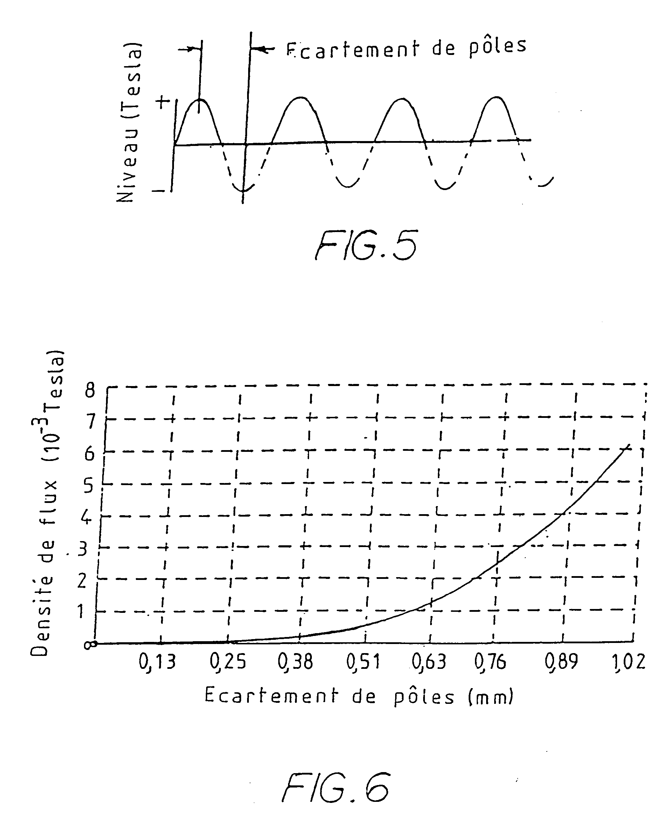

Les niveaux de résolution requis sont différents dans de nombreux produits et applications. Dans la détermination du niveau de résolution nécessaire pour un codeur, le paramètre clé est le nombre de paires de pôles magnétiques (PPM), lequel est en rapport étroit avec l'écartement de pôles. La Fig. 5 illustre ce qu'on entend par écartement de pôles en se référant au champ magnétique produit par la paire de pôles (PPM); en outre, aux Figs. 3 et 4, la dimension de l'écartement de pôles est indiquée par la lettre "X". A noter que cette dimension est égale à la largeur de pôle, également indiquée par "X" aux Figs. 1 et 2. L'écartement de pôles est la distance entre paires de pôles magnétiques adjacentes (PPM), par exemple entre la densité de flux de crête d'un pôle nord et la densité de flux de crête d'un pôle sud voisin. La décision sur la configuration de codeur à utiliser fait intervenir de nombreux facteurs autres que la résolution. Par exemple, dans une application de palier détecteur, on doit se poser la question de savoir lequel il faut d'un roulement de type radial ou d'un palier de butée. De plus, la charge à supporter par le palier joue sur le type de palier à utiliser, à savoir un palier à billes ou un palier à rouleaux, etc. D'autres facteurs sont l'emploi ou non d'éléments roulants, et si oui, l'emploi d'une cage, ou d'une griffe de retenue, ou d'un séparateur. Le dernier facteur, mais non le moindre doit être de savoir si dans la configuration de produit optimale, on peut utiliser une configuration de codeur qui procure le niveau de résolution requis. Si ce n'est pas possible, on doit rechercher une autre configuration de produit.

En plus de l'exigence concernant le niveau de résolution, on doit également satisfaire à l'exigence concernant le flux magnétique. Même si le nombre de paires de pôles magnétiques pour un certain niveau de résolution peut être obtenu, il faut également que chaque paire de pôles magnétiques procure une densité de flux magnétique minimum ou valeur seuil dans les conditions limites, afin d'assurer que le capteur utilisé détectera le flux et produira en réponse un signal de sortie suffisant. Par exemple, si la plage de température dans laquelle un produit doit fonctionner est connue, on prend la température la plus élevée pour calculer la densité de flux magnétique, du fait que la densité du flux diminue lorsque la température augmente, selon la relation suivante :

$$F_t = (F_r) (1 - (K_4) (\Delta T))$$

où

$F_t$ est la densité de flux magnétique corrigée pour la température réelle,

$F_r$ est la densité de flux magnétique à la température de référence,

$K_4$ est un coefficient de température pour un matériau spécifique, et

$\Delta T$ est la différence entre la température réelle et la température de référence.

Généralement, la plage de température considérée aura pour limite inférieure -40° C, environ, et pour limite supérieure +200° C, environ.

Le coefficient de température pour le ferrite de strontium et le ferrite de baryum est d'environ 0,18% par degré Centigrade; pour le ferrite de strontium et le ferrite de baryum, la relation devient donc :

$$F_t = (F_r) (1 - (0,18\% \text{ par degré Centigrade.})(\Delta T))$$

Donc, si la valeur seuil de densité de flux est obtenue à la température la plus élevée que le produit ait à supporter, le capteur produira alors un signal de sortie adéquat dans les conditions de température limites. Tous les autres facteurs qui, en plus de la température, peuvent influer sur la densité de flux magnétique sont pris en compte de la même façon pour déterminer la densité de flux magnétique de seuil.

On fait alors l'examen des matériaux magnétisables pour déterminer lequel est le plus approprié pour obtenir en combinaison le nombre de paires de pôles magnétiques (PPM) et la densité de flux magnétique déterminées dans les étapes (a) à (c) sus-mentionnées. De nombreux aimants en matériaux du groupe des terres rares, tels que des aimants en néodyme-fer-bore, peuvent procurer des densités de flux magnétique particulièrement élevées avec une quantité minimum de matériau; néanmoins, ces matériaux sont plus chers que certains matériaux plus faibles tels que le ferrite de strontium et le ferrite de baryum. Le moins cher des matériaux qui satisfont aux exigences tant de résolution que de flux est normalement choisi en tant que matériau optimal.

Par exemple, dans de nombreuses applications de l'automobile, un codeur au ferrite de strontium ou au ferrite de baryum permettra normalement d'obtenir un nombre suffisant de paires de pôles magnétiques, ainsi que des densités de flux magnétiques adéquates; on pourra donc utiliser ces matériaux pour ces applications, plutôt qu'un matériau plus puissant mais plus cher comme le samarium-cobalt.

Une fois le matériau choisi, un codeur est fabriqué en réalisant la forme correspondant à la configuration de codeur désirée, et en magnétisant le matériau avec le nombre de paires de pôles magnétiques (PPM) nécessaire pour obtenir le niveau de résolution désiré. Par exemple, un codeur annulaire tel que celui des Figs. 2 à 4 peut comporter 360 paires de pôles magnétiques (PPM) dans une bague annulaire en ferrite de strontium de 6,6 cm de diamètre. Ce codeur sera capable de produire une densité de flux magnétique d'environ $10^{-3}$ Tesla, à une distance d'environ 0,9 mm de la surface de l'aimant. Le codeur a un écartement de pôles d'environ 0,58 mm et une épaisseur (T) de 0,71 mm.

L'épaisseur (T) du codeur est un paramètre important car le flux magnétique engendré par le codeur peut être augmenté pour une quantité fixée de matériau constituant le codeur en optimisant le rapport entre l'épaisseur du codeur et l'écartement de pôles. D'après des recherches menées par les présents inventeurs, un rapport d'environ 1,25 est optimal, ce qui signifie que l'épaisseur du codeur doit être environ 1,25 fois la dimension de l'écartement de pôles, d'où une plage d'épaisseurs de 0,3 mm, environ, à 1,5 mm, environ, correspondant à la plage d'écartement de pôles sus-mentionnée de 0,25 mm, environ, à 1,25 mm, environ. Dans de nombreuses applications de produit, la plage de 1,25 +/- 25% pour ce rapport s'avère acceptable. Les Figs. 3 et 4 donnent des éclaircissements sur les dimensions de l'épaisseur (T) et de l'écartement de pôles (X) pour des codeurs annulaires utilisés dans des roulements de type radial et des paliers de butée, respectivement.

La Fig. 6 est un graphique de la relation optimale entre l'écartement de pôles et la densité de flux magnétique mentionnée précédemment. Pour une valeur seuil de densité de flux magnétique requise correspondant à un entrefer connu, la plus grande dimension possible pour l'écartement de pôles peut être déterminée à partir du graphique. Cet écartement de pôles déterminera un nombre spécifique de paires de pôles magnétiques (PPM). Par exemple, une fois que l'écartement de pôles pour une densité de flux donnée est déterminée, le nombre de paires de pôles magnétiques qui peuvent être magnétisées dans un codeur annulaire peut être calculé en utilisant la relation suivante :

Nombre de (PPM) = (D)(π)/X

où

D est le diamètre du codeur annulaire, et
X est l'écartement de pôles.

Pour une densité de flux donnée, on considère que la plage de 80% à 100% du nombre de paires de pôles magnétiques calculé pour un codeur particulier est une amélioration par rapport aux codeurs connus. Le graphique de la Fig. 6 a été établi en utilisant des codeurs en résine synthétique au ferrite de strontium avec un facteur de charge de 33%. Les mesures de densité de flux ont été faites à +20° C, avec un entrefer de 0,9 mm entre la surface externe du codeur et la partie sensible d'un capteur de Hall.

**Revendications**

1. Codeur caractérisé en ce qu'il comprend un élément magnétisable d'épaisseur et de largeur déterminées, lequel élément magnétisable présente une pluralité de paires de pôles magnétiques (PPM) écartées à intervalles réguliers sur sa longueur, selon un écartement de pôles entre paires de pôles adjacentes déterminé, ledit écartement de pôles se trouvant dans une plage de valeurs comprise entre 0,25 mm, environ, et 1,25 mm, environ, et à chacune desdites paires de pôles magnétiques (PPM) étant attribuée une valeur de densité de flux magnétique de référence $(F_r)$ dans une plage de $2.10^{-4}$ Tesla, environ, à $7.10^{-2}$ Tesla, environ, à une distance de 0,9 mm de la surface dudit codeur et à une température d'environ +20° C,

chacune desdites valeurs $(F_r)$ étant fonction d'une plage de valeurs d'écartement de pôles suivant la relation :

$$F_r = \frac{(K_1)(X)}{25,4} - \frac{(K_2)(140X^2)}{(25,4)^2} + \frac{(K_3)(7\,920X^3)}{(25,4)^3},$$

où

$K_1 = 1,58.10^{-2}$ à $10,56.10^{-2}$ Tesla par mm,
$K_2 = 1,58.10^{-2}$ à $10,56.10^{-2}$ Tesla par mm²,
$K_3 = 1,58.10^{-2}$ à $10,56.10^{-2}$ Tesla par mm³,
X est l'écartement de pôles entre paires (PPM) adjacentes (en mm), et
$F_r$ est la plage de densité de flux magnétique de référence (en Tesla) à +20° C, lorsque les valeurs numériques de $K_1$, $K_2$ et $K_3$ sont égales.

2. Codeur selon la revendication 1, caractérisé en ce que ledit élément magnétisable est annulaire, le nombre de paires de pôles magnétiques (PPM) étant donné par la relation :

nombre de (PPM) = (D)(π)/X

où

D est le diamètre du codeur, et
X est l'écartement de pôles.

3. Codeur selon la revendication 1 ou 2, caractérisé en ce que ladite température varie dans une plage allant de -40° C, environ, à +200° C, environ, et en ce que ladite densité de flux magnétique de référence $(F_r)$ varie avec la température selon la relation suivante :

$$F_t = (F_r)(1 - (K_4)(\Delta T))$$

où

$F_r$ est la densité de flux magnétique de référence (en Tesla) à 20° C,
$F_t$ la densité de flux magnétique à la température t,
$\Delta T$ la température réelle moins 20° C, et
$K_4$ le coefficient de température pour ledit élément magnétisable.

4. Codeur selon l'une des revendications 1 à 3, caractérisé en ce que l'épaisseur dudit élément magnétisable est optimisée en la prévoyant égale à l'écartement de pôles multiplié par un facteur de 1,25, environ, ce qui correspond à une plage d'épaisseurs de 0,3 mm, environ, à 1,5 mm, environ.

5. Codeur selon la revendication 4, caractérisé en ce que ledit facteur se trouve dans une plage de 1,25 +/- 25%.

6. Codeur selon l'une des revendications 1 à 5, caractérisé en ce que ledit élément magnétisable est en matériau faisant partie du groupe de ceux qui comprennent du ferrite de strontium et du ferrite de baryum.

7. Codeur selon la revendication 6, caractérisé en ce que le facteur de charge de l'élément magnétisable en ferrite de strontium ou ferrite de baryum est de 33%, et en ce qu'à chaque paire de pôles magnétiques (PPM) est attribuée une valeur de densité de flux magnétique de référence $(F_r)$ dans la plage d'environ $2.10^{-4}$ Tesla à environ $1,58.10^{-2}$ Tesla à une distance de 0,9 mm de la surface dudit codeur et à une température d'environ +20° C, et en ce que dans la relation :

$$F_{(r)} = \frac{(K_1)(X)}{25,4} - \frac{(K_2)(140X^2)}{(25,4)^2} + \frac{(K_3)(7\,920X^3)}{(25,4)^3},$$

$K_1 = 1,58.10^{-2}$ à $2,3.10^{-2}$ Tesla par mm
$K_2 = 1,58.10^{-2}$ à $2,3.10^{-2}$ Tesla par mm²

$K_3$ = 1,58.10$^{-2}$ à 2,3.10$^{-2}$ Tesla par mm$^3$

8. Codeur selon la revendication 7, caractérisé en ce que ledit élément magnétisable est annulaire, en ce que l'écartement de pôles est de 0,25 mm, et en ce que le diamètre de la surface externe de l'élément magnétisable est dans la plage d'environ 12,5 mm à environ 200 mm.

9. Codeur selon la revendication 6, caractérisé en ce qu'entre ladite densité de flux magnétique ($F_t$) à une température donnée et ledit facteur de charge, on a la relation suivante :

$$F = (K_9/0,33) \, X \, (F_t)$$

où

    F est la densité de flux magnétique pour une température et un facteur de charge spécifiques,

    $F_t$ est la densité de flux magnétique pour la même température et un facteur de charge de 0,33, et

    $K_9$ est le facteur de charge réel en ferrite de strontium ou ferrite de baryum.

10. Procédé pour magnétiser un codeur destiné à être utilisé dans un ensemble de palier, caractérisé en ce qu'il comprend les étapes suivantes :

    (a) étudier les exigences pour l'application spécifique, afin de déterminer le nombre de paires de pôles magnétiques nécessaire pour obtenir le niveau de résolution désiré, et pour déterminer quelle configuration de codeur convient le mieux à cette application particulière, la valeur de densité de flux magnétique attribuée à chaque paire de pôles étant fonction d'une plage de valeurs d'écartement de pôles suivant la relation :

$$F_r = \frac{(K_1)(X)}{25,4} - \frac{(K_2)(140X^2)}{(25,4)^2} + \frac{(K_3)(7\,920X^3)}{(25,4)^3}$$

où

$K_1$ = 1,58.10$^{-2}$ à 10,56.10$^{-2}$ Tesla par mm
$K_2$ = 1,58.10$^{-2}$ à 10,56.10$^{-2}$ Tesla par mm$^2$
$K_3$ = 1,58.10$^{-2}$ à 10,56.10$^{-2}$ Tesla par mm$^3$
X est l'écartement de pôles entre paires (PPM) adjacentes (en mm), et
$F_r$ est la plage de densité de flux magnétique de référence (en Tesla) à +20° C, lorsque les valeurs numériques de $K_1$, $K_2$, $K_3$ sont égales;

    (b) déterminer l'entrefer maximum associé à la configuration de codeur retenue pour cette application spécifique;

    (c) déterminer la valeur minimum ou valeur de seuil de la densité de flux magnétique nécessaire pour assurer que le capteur établira ou coupera le contact dans des conditions d'entrefer maximum;

    (d) déterminer quels matériaux magnétiques sont utilisables pour fabriquer le codeur de manière à y placer un nombre suffisant de paires de pôles magnétiques (PPM), chaque paire ayant un emplacement précis et une densité de flux au moins égale à la valeur déterminée à l'étape précédente (c), afin de satisfaire aux exigences concernant le niveau de résolution désiré pour l'application spécifique;

    (e) faire une sélection dans le groupe des matériaux magnétiques possibles, déterminé dans l'étape précédente (d), pour retenir le matériau optimal qui soit le meilleur marché tout en ayant la capacité de répondre aux exigences de l'application particulière; et

    (f) magnétiser un élément annulaire fabriqué dans ce matériau optimal choisi dans l'étape (e) précédente, en formant au moins le nombre de paires de pôles magnétiques (PPM) nécessaire pour cette application spécifique à haute résolution, et de telle manière que chaque paire de pôles magnétiques (PPM) ait une densité de flux au moins égale à la valeur déterminée dans l'étape antérieure (c).

## Claims

1. A coder, characterised in that it includes a magnetisable element of predetermined thickness and width, wherein the said magnetisable element has a plurality of magnetic pole pairs (MPP) spaced apart at regular intervals over its length, with a predetermined pole pitch between adjacent pole pairs, the said pole pitch lying in a range of values between about 0.25 mm and about 1.25 mm, with a reference value ($F_r$) of magnetic flux density, in a range from about 2 x 10$^{-4}$ Tesla to about 7 x 10$^{-2}$ Tesla at a distance of 0.9 mm from the surface of the said coder and at a temperature of about +20°C, being attributed to each of the said magnetic pole pairs (MPP), with each of the said values ($F_r$) being a function of the range of values of pole pitch according to the equation:

$$F_r = \frac{(K_1)(X)}{25.4} - \frac{(K_2)(140X^2)}{(25.4)^2} + \frac{(K_3)(7\,920X^3)}{(25.4)^3},$$

where

    $K_1$ = 1.58 x 10$^{-2}$ to 10.56 x 10$^{-2}$ Tesla per mm,

    $K_2$ = 1.58 x 10$^{-2}$ to 10.56 x 10$^{-2}$ Tesla per mm$^2$,

    $K_3$ = 1.58 x 10$^{-2}$ to 10.56 x 10$^{-2}$ Tesla per mm$^3$,

    X is the pole pitch between adjacent pairs (MPP) in mm, and

    $F_r$ is the range of reference magnetic flux density (in Tesla) at +20°C when the numerical

values of $K_1$, $K_2$ and $K_3$ are equal.

2. A coder according to Claim 1, characterised in that the said magnetisable element is annular, the number of magnetic pole pairs (MPP) being given by the equation:

Number of (MPP) = $(D)(\pi)/X$,

where D is the diameter of the coder, and
X is the pole pitch.

3. A coder according to Claim 1 or Claim 2, characterised in that the said temperature varies in a range going from about -40°C to about +200°C, and in that the said reference magnetic flux density ($F_r$) varies with temperature according to the following equation:

$$F_t = (F_r)(1 - (K_4)(\Delta T))$$

where $F_r$ is the reference magnetic flux density (in Tesla) at 20°C,
$F_t$ is the magnetic flux density at temperature t,
$\Delta T$ is the actual temperature less 20°C, and
$K_4$ is the temperature coefficient for the said magnetisable element.

4. A coder according to one of Claims 1 to 3, characterised in that the thickness of the said magnetisable element is optimised by making it equal to the pole pitch multiplied by a factor of about 1.25, which corresponds to a range of thicknesses from about 0.3 mm to about 1.5 mm.

5. A coder according to Claim 4, characterised in that the said factor lies in the range of 1.25 +/- 25%.

6. A coder according to one of Claims 1 to 5, characterised in that the said magnetisable element is of a material selected from the group comprising strontium ferrite and barium ferrite.

7. A coder according to Claim 6, characterised in that the charge factor of the magnetisable element of strontium ferrite or barium ferrite is 33%, and in that a value of reference magnetic flux density ($F_r$) is attributed to each magnetic pole pair (MPP) in the range of about $2 \times 10^{-4}$ Tesla to about $1.58 \times 10^{-2}$ Tesla at a distance of 0.9 mm from the surface of the said coder and at a temperature of about +20°C, and in that in the equation:

$$F(r) = \frac{(K_1)(X)}{25.4} - \frac{(K_2)(140X^2)}{(25.4)^2} + \frac{(K_3)(7\,920X^3)}{(25.4)^3},$$

$K_1 = 1.58 \times 10^{-2}$ to $2.3 \times 10^{-2}$ Tesla per mm,
$K_2 = 1.58 \times 10^{-2}$ to $2.3 \times 10^{-2}$ Tesla per mm²,

$K_3 = 1.58 \times 10^{-2}$ to $2.3 \times 10^{-2}$ Tesla per mm³.

8. A coder according to Claim 7, characterised in that the said magnetisable element is annular, in that the pole pitch is 0.25 mm, and in that the diameter of the outer surface of the magnetisable element is in the range from about 12.5 mm to about 200 mm.

9. A coder according to Claim 6, characterised in that the said magnetic flux density ($F_t$) at a given temperature is related to the said charge factor by the following equation:

$$F = (K_9/0.33) \times (F_t)$$

where f is the magnetic flux density for a specific temperature and a specific charge factor,
$F_t$ is the magnetic flux density for the same temperature and a charge factor of 0.33, and
$K_9$ is the actual charge factor in strontium ferrite or barium ferrite.

10. A method of magnetising a coder adapted to be used in a bearing assembly, characterised in that it includes the following steps:

(a) studying the elements required for the specific application so as to determine the number of magnetic pole pairs necessary in order to obtain the desired level of resolution, and to determine what coder configuration is most suitable for that particular application, the value of magnetic flux density attributed to each pole pair being a function of a range of values of pole pitches given by the equation:

$$F_r = \frac{(K_1)(X)}{25.4} - \frac{(K_2)(140X^2)}{(25.4)^2} + \frac{(K_3)(7\,920X^3)}{(25.4)^3},$$

where
$K_1 = 1.58 \times 10^{-2}$ to $10.56 \times 10^{-2}$ Tesla per mm,
$K_2 = 1.58 \times 10^{-2}$ to $10.56 \times 10^{-2}$ Tesla per mm²,
$K_3 = 1.58 \times 10^{-2}$ to $10.56 \times 10^{-2}$ Tesla per mm³,
X is the pole pitch between adjacent pairs (MPP) in mm, and
$F_r$ is the range of reference magnetic flux density (in Tesla) at +20°C when the numerical values of $K_1$, $K_2$ and $K_3$ are equal;
(b) determining the maximum air gap associated with the coder configuration adopted for that specific application;
(c) determining the minimum value or threshold value of the magnetic flux density that is necessary in order to ensure that the sensor will make or break contact under maximum air gap conditions;

(d) determining what magnetic materials can be used for making the coder in such a way as to provide therein a sufficient number of magnetic pole pairs (MPP), with each pair being precisely located and having a flux density which is at least equal to the value determined in the preceding step (c), whereby to satisfy the requirements concerning the desired level of resolution for the specific application;

(e) making a selection from the group of possible magnetic materials determined in the preceding step (d) so as to retain the optimum material, which is the cheapest material having the capacity to respond to the requirements of the particular application; and

(f) magnetising an annular element, made in this optimum material selected in the preceding step (e), by forming at least the number of magnetic pole pairs (MPP) that is necessary for this specific high resolution application, and in such a way that each magnetic pole pair (MPP) has a flux density which is at least equal to the value determined in the earlier step (c).

**Patentansprüche**

1. Codierer, dadurch gekennzeichnet, daß er ein magnetisierbares Element festgelegter Dicke und Breite enthält, das eine Vielzahl von Magnetpolpaaren (PPM) aufweist, die in gleichmäßigen Abständen über seiner Länge entsprechend einem festgelegten Polabstand zwischen aneinandergrenzenden Polpaaren vorgesehen sind, wobei der Polabstand in einem Wertebereich zwischen etwa 0,25 mm und etwa 1,25 mm liegt und jedem Magnetpolpaar (PPM) ein Bezugswert ($F_r$) der magnetischen Flußdichte in einem Bereich von etwa $2 \cdot 10^{-4}$ Tesla bis etwa $7 \cdot 10^{-2}$ Tesla bei einer Entfernung von 0,9 mm von der Oberfläche des Codierers und bei einer Temperatur von etwa +20 ° C zugeordnet ist,

wobei jeder der Werte ($F_r$) gemäß der folgenden Beziehung von einem Polabstandswertebereich abhängt:

$$F_r = \frac{(K_1)(X)}{25{,}4} - \frac{(K_2)(140X^2)}{(25{,}4)^2} + \frac{(K_3)(7\ 920X^3)}{(25{,}4)^3},$$

in der

$K_1 = 1{,}58.10^{-2}$ bis $10{,}56.10^{-2}$ Tesla pro mm,

$K_2 = 1{,}58.10^{-2}$ bis $10{,}56.10^{-2}$ Tesla pro mm$^2$,

$K_3 = 1{,}58.10^{-2}$ bis $10{,}56.10^{-2}$ Tesla pro mm$^3$,

X der Polabstand zwischen aneinandergrenzenden Paaren (PPM) ist (in mm), und

$F_r$ der Bereich der magnetischen Bezugsflußdichte (in Tesla) bei + 20 ° C ist, wenn die Zahlenwerte von $K_1$, $K_2$ und $K_3$ gleich sind.

2. Codierer nach Anspruch 1, dadurch gekennzeichnet, daß das magnetisierbare Element ringförmig ist, wobei die Anzahl von Magnetpolpaaren (PPM) durch die folgende Beziehung gegeben ist:

Anzahl von (PPM) = (D) (π)/X,

in der

D der Durchmesser des Codierers und
X der Polabstand ist.

3. Codierer nach Anspruch 1 oder 2, dadurch gekennzeichnet, daß die Temperatur in einem von etwa - 40 ° C bis etwa + 200 ° C reichenden Bereich variiert und daß die magnetische Bezugsflußdichte ($F_r$) mit der Temperatur entsprechend der folgenden Beziehung variiert:

$$F_t = (F_r)(1 - (K_4)(\Delta T)),$$

in der

$F_r$ die magnetische Bezugsflußdichte (in Tesla) bei 20 ° C ist,

$F_t$ die magnetische Flußdichte bei der Temperatur t ist,

$\Delta T$ die tatsächliche Temperatur weniger 20 ° C ist, und

$K_4$ der Temperaturkoeffizient für das magnetisierbare Element ist.

4. Codierer nach einem der Ansprüche 1 bis 3, dadurch gekennzeichnet, daß die Dicke des magnetisierbaren Elements optimiert ist, indem sie gleich dem Polabstand multipliziert mit einem Faktor von etwa 1,25 gewählt ist, was einem Dickebereich von etwa 0,3 mm bis etwa 1,5 mm entspricht.

5. Codierer nach Anspruch 4, dadurch gekennzeichnet, daß der Faktor in einem Bereich von 1,25 +/- 25 % liegt.

6. Codierer nach einem der Ansprüche 1 bis 5, dadurch gekennzeichnet, daß das magnetisierbare Element aus einem Material besteht, das zu der Gruppe jener Materialien gehört, die Strontiumferrit und Bariumferrit enthalten.

7. Codierer nach Anspruch 6, dadurch gekennzeichnet, daß der Ladungsfaktor des magnetisierbaren Elements für Strontiumferrit oder Bariumferrit 33 % beträgt, daß jedem Magnetpolpaar (PPM) ein magnetischer Bezugsflußdichtewert ($F_r$) in dem Bereich von etwa $2 . 10^{-4}$ Tesla bis etwa $1{,}58 . 10^{-2}$ Tesla bei einer Entfernung von 0,9 mm von der Oberfläche des Codierers und bei einer Temperatur von etwa + 20 ° C zugeordnet ist, und daß in der Beziehung

$$F_{(r)} = \frac{(K_1)\,(X)}{25,4} - \frac{(K_2)\,(140X^2)}{(25,4)^2} + \frac{(K_3)\,(7\,920X^3)}{(25,4)^3},$$

folgendes gilt:

$K_1 = 1,58.10^{-2}$ bis $2,3.10^{-2}$ Tesla pro mm

$K_2 = 1,58.10^{-2}$ bis $2,3.10^{-2}$ Tesla pro mm$^2$

$K_3 = 1,58.10^{-2}$ bis $2,3.10^{-2}$ Tesla pro mm$^3$.

8. Codierer nach Anspruch 7, dadurch gekennzeichnet, daß das magnetisierbare Element ringförmig ist, daß der Polabstand bei 0,25 mm liegt, und daß der Durchmesser der Außenfläche des magnetisierbaren Elements in dem Bereich von etwa 12,5 mm bis etwa 200 mm liegt.

9. Codierer nach Anspruch 6, dadurch gekennzeichnet, daß zwischen der magnetischen Flußdichte ($F_t$) bei einer gegebenen Temperatur und dem Ladungsfaktor die folgende Beziehung besteht:

$$F = (K_9/0,33)\ X\ (F_t),$$

in der

$F$ die magnetische Flußdichte für eine spezielle Temperatur und einem speziellen Ladungsfaktor ist,

$F_t$ die magnetische Flußdichte für dieselbe Temperatur und einen Ladungsfaktor von 0,33 ist, und

$K_9$ der tatsächliche Ladungsfaktor für eine Ladung aus Strontiumferrit oder Bariumferrit ist.

10. Verfahren zur Magnetisierung eines Codierers, der dazu bestimmt ist, in einer Lagereinheit verwendet zu werden, dadurch gekennzeichnet, daß es die folgenden Schritte enthält:

(a) Ermitteln der Anforderungen für die spezielle Anwendung, um die Anzahl von Magnetpolpaaren zu bestimmen, die erforderlich ist, um den gewünschten Auflösungsgrad zur erhalten, und um zu bestimmen, welcher Codiereraufbau dieser besonderen Anwendung am besten entspricht, wobei der einem jeweiligen Polpaar zugeordnete magnetische Flußdichtewert entsprechend der folgenden Beziehung von einem Polabstandwertebereich abhängt:

$$F_r = \frac{(K_1)\,(X)}{25,4} - \frac{(K_2)\,(140X^2)}{(25,4)^2} + \frac{(K_3)\,(7\,920X^3)}{(25,4)^3},$$

in der

$K_1 = 1,58.10^{-2}$ bis $10,56.10^{-2}$ pro mm

$K_2 = 1,58.10^{-2}$ bis $10,56.10^{-2}$ pro mm$^2$,

$K_3 = 1,58.10^{-2}$ bis $10,56.10^{-2}$ pro mm$^3$,

$X$ der Polabstand zwischen aneinandergrenzenden Paaren (PPM) ist (in mm), und

$F_r$ der Bereich der magnetische Bezugsflußdichte (in Tesla) bei $+20\,°$C ist, wenn die Zahlenwerte von $K_1$, $K_2$ und $K_3$ gleich sind,

(b) Bestimmten des maximalen Luftspalts für den Codiereraufbau, der für diese spezielle Anwendung vorgesehen ist,

(c) Bestimmten des minimalen Wertes oder des Schwellenwertes der magnetischen Flußdichte, der erforderlich ist, um sicherzustellen, daß der Fühler unter den Bedingungen eines maximalen Luftspalts den Kontakt herstellt oder unterbricht,

(d) Bestimmten, welche magnetischen Materialien dazu geeignet sind, den Codierer so herzustellen, daß darin eine ausreichende Anzahl von Magnetpolpaaren (PPM) angeordnet werden kann, wobei jedes Paar genau plaziert ist und eine Flußdichte besitzt, die zumindest gleich dem bei dem vorhergenden Schritt (c) bestimmten Wert ist, um den Anforderungen zu genügen, die den für die spezielle Anwendung gewünschten Auflösungsgrad betreffen,

(e) Treffen einer Auswahl aus der Gruppe der in Frage kommenden magnetischen Materialien, die in dem vorhergehenden Schritt (d) bestimmt wurde, um sich auf das optimale Material festzulegen, das am günstigsten ist und gleichzeitig die Eigenschaft besitzt, den Anforderungen des speziellen Anwendungsfalls zu genügen, und

(f) Magnetisieren eines ringförmigen Elements, das aus diesem optimalen Material hergestellt ist, das in dem vorhergehenden Schritt (e) ausgewählt wurde, indem wenigstens eine solche Anzahl von Magnetpolpaaren (PPM) gebildet wird, wie sir für diesen speziellen Anwendungsfall mit hoher Auflösung erforderlich ist, derart, daß jedes Magnetpolpaar (PPM) eine Flußdichte besitzt, die zumindest gleich dem Wert ist, der in dem früheren Schritt (c) bestimmt wurde.

FIG. 1

FIG. 2

FIG. 3

FIG. 4

FIG.5

FIG.6